Europäisches Patentamt

European Patent Office

Office européen des brevets

(11) Publication number: **0 194 888 B1**

(12) **EUROPEAN PATENT SPECIFICATION**

(45) Date of publication of patent specification: **26.02.92**  (51) Int. Cl.⁵: **H03M 13/00**, G11B 20/18

(21) Application number: **86301828.9**

(22) Date of filing: **13.03.86**

(54) **Error detection.**

(30) Priority: **13.03.85 JP 50136/85**

(43) Date of publication of application:
**17.09.86 Bulletin 86/38**

(45) Publication of the grant of the patent:
**26.02.92 Bulletin 92/09**

(84) Designated Contracting States:
**AT DE FR GB NL**

(56) References cited:
**EP-A- 0 072 640**
**EP-A- 0 129 849**
**WO-A-85/00065**
**GB-A- 2 107 496**
**US-A- 4 330 860**

(73) Proprietor: **SONY CORPORATION**
**7-35 Kitashinagawa 6-Chome Shinagawa-ku**
**Tokyo 141(JP)**

(72) Inventor: **Himeno, Takuji c/o Sony Corporation**
**Patents Division 6-7-35 Kitashinagawa**
**Shinagawa-ku Tokyo 141(JP)**

(74) Representative: **Cotter, Ivan John et al**
**D. YOUNG & CO. 10 Staple Inn**
**London WC1V 7RD(GB)**

Rank Xerox (UK) Business Services

## Description

This intention relates to methods of error detection and to methods of error detection and correction. Methods embodying the invention may be used, for example, to detect (and to correct) a possible code error which may be generated when a digital signal is transmitted through a transmission path, for example in a recording/reproducing apparatus or the like.

In the case of recording a digital audio signal on a magnetic tape, what is called a cross-interleaving technique may, for example, be used. In this technique, a time sequence of the digital audio signal is interchanged and first and second parities are sequentially added to a predetermined number of series of the interchanged items of data.

There is also a case where an error checking code, for example a cyclic redundancy check (CRC) code, is added to every predetermined number of series of the data obtained by applying the cross-interleaving technique.

To correct errors in data reproduced from the magnetic tape, a check is first made, using an error checking code, to see whether or not an error is detected in the data. The result of this check is added as a flag to each item of data and stored in a memory (RAM). The error correcting process is executed with reference to this flag.

When data is decoded, in the case where, for example, a magnetic tape which has been used previously is used again to record new data, some prerecorded data sometimes can be reproduced since the previous data may not be erased completely. Even if a CRC check is performed with respect to such remaining data, no error can be detected.

There is also a small probability that it is impossible to detect an error by a CRC code in dependence on an error generation pattern. Therefore, some data is processed as error-free data in spite of the fact that it actually contains some errors. Such data containing errors that were not detected is reproduced as an abnormal sound, giving rise to a problem that the reproduced sound quality deteriorates to an extreme extent.

The present applicants have proposed a solution to the foregoing problem by way of a method disclosed in their International (PCT) Patent Application Publication No. WO85/00065 which was published on 3 January 1985. According to the method disclosed in WO85/00065, as the result of a parity check using not only a CRC code but also two error correction code series (called P series and Q series) due to the cross-interleaving, when parity errors are detected in the respective P and Q series or when a parity error is detected in one of the P and Q series and a CRC error is detected in the other series, a check of the word becomes impossible and this word is determined in this case to be a word having a parity error. On the other hand, when no parity error is detected in at least one of the P and Q series, this word is decided to be a correct word.

A data block having a parity error is specified using the result of the above-mentioned parity error discrimination operation. The following two methods of setting an error pointer have been proposed in WO85/00065.

(1) When at least one word which was determined to have a parity error exits in the data block, a pointer indicative of an error is set to all words in this data block.

(2) When one or more words which were determined to have parity errors exists in the data block and, also, a word which was decided to be correct does not exist in this data block, a pointer representative of an error is set to all words in this data block.

However, according to the first previously proposed method, if at least one word which was determined to have a parity error exists in the data block, all words in this data block are determined to be erroneous words. Therefore, in spite of the fact that correct words exist in the data block, the pointer indicative of an error is set. Thus, the words which were considered to have an error, in spite of the fact that they actually have no error, are subjected to an error correcting process. If the corrected word, which was erroneously determined to have an error, is not corrected by the error correcting process, this word will be interpolated by the mean value of the words located in time before and after this correct word, or the word located in time just before this correct word will be held in place of this correct word. Consequently, there is a risk of deterioration of sound quality.

On the other hand, the use of the second previously proposed method can prevent the situation that correct words existing in the data block having a parity error are unnecessarily and erroneously handled as erroneous words. Therefore, the second method is better in general than the first method.

However, if one word existing in the data block having a parity error is a word which has remained on the magnetic tape without being erased and also incidentally coincides with the inherent error-free word overwritten on the magnetic tape, or in the case where two or more parity errors are generated in the P or Q series and these parity errors were incidentally not detected when the parity check of this series was performed, the result of the parity check of this series is considered to have no error.

Therefore, according to the second method, the pointer representative of an error is not set to this data bock and the parity error is overlooked. Further, if the correction is repeated using the word whose parity error was overlooked, the erroneous correction will be increased and an abnormal sound will be generated.

Thus, in the case where the overlooking of an error due to an incidental coincidence occurs, it is preferable to use the first method to prevent the generation of an abnormal sound.

In the first method, a case exists where the correct word is regarded as an erroneous word and, if this word is not determined to be correct by the error correcting process, it is subjected to an interpolating process or a previous word value holding process, so that the sound quality deteriorates. Therefore, when the overlooking of an error due to incidental coincidence does not occur, it is desirable to use the second method. However, the occurrence of the overlooking of an error due to incidental coincidence can be detected only when the error correction is executed; therefore, it is impossible to select either the first or second method before execution of the error correction.

In addition, if the error correction is first performed by the second method and the overlooking of an error is detected during error correction, the results of the error correction so far are all invalidated, and then the error correction may be executed again using the first method. However, with such a method, the processing time taken for the error correction by the second method becomes wasted, resulting in a reduction in time available for the error correcting process. For example, this decreases the number of repetition times for the error correction to be carried out by alternately repeating the P and Q series and gives rise to a problem of a remarkable deterioration of the correcting capability.

According to a first aspect of the invention there is provided a method of detecting error words in a data block formed by a plurality of words each comprising a predetermined number of bits of a digital signal, a predetermined number of such data blocks forming a matrix of a code block, each data block having a first error check code, a second error check code being produced by one series in the code block matrix, and a third error check code being produced by another series in the code block matrix, the method comprising the steps of:

executing an error check in each data block by the use of the first error check code and setting an error pointer to all the words in the respective data block when an error is detected;

executing an error check in each data block in which no error has been detected by the first error check code using the second error check code and the third error check code; and

in accordance with the execution of the error check using the second and third error check codes, setting the pointer for each word in each data block either to a correct pointer indicating that each of the words in the data block is correct, or to the error pointer indicating that each of the words has an error, or to a neutral pointer indicating that no determination has been made whether each of the words is correct or has an error.

According to a second aspect of the invention there is provided apparatus which is operative to carry out the above method.

The method preferably includes a step of correcting the error words, the step comprising, after the pointer setting step, executing error correction repeatedly by the use of the second and third error check codes, whereby each word with either the error pointer or the neutral pointer corrected using only a word with the correct pointer is then set to have the correct pointer, and each word with the error pointer corrected using a word with the neutral pointer is then set to have the neutral pointer.

A preferred embodiment of the present invention described hereinbelow is intended to eliminate or at least alleviate the problems associated with the above-mentioned first and second previously proposed error correcting methods. The preferred embodiment seeks to increase the error correcting capability by minimising the number of mistakes where correct words are regarded as erroneous words; to certainly detect and correct the words having errors; and to provide an error correcting method having an excellent error correcting capability with respect to the processing time which is required for error correction.

According to the preferred embodiment of the invention, in addition to a word having an error and the correct word, a word which does not belong to both of those types of word, namely, a word of which the presence or absence of an error is not yet determined, is used, thereby discriminating between whether the word is a word having an error or the correct word during execution of the error correcting process.

The invention will now be further described, by way of illustrative and non-limiting example, with reference to the accompanying drawings, in which:

Figure 1 is a block diagram of codes which are arranged two-dimensionally for convenience in explaining a code arrangement employed in an embodiment of the present invention;

Figure 2 is a data arrangement diagram for a case where words shown in Figure 1 are recorded on a magnetic tape;

Figure 3 is a diagram showing a data arrangement of each word which can be used in this embodiment;

Figure 4 is a diagram showing an example of the states of flags (flag map) for use in an explanation of how the invention may be implemented;

Figures 5A to 5D are diagrams showing the states of pointers when a method embodying the invention is applied to the flag map shown in Figure 4;

Figures 6A to 6D are diagrams showing the states of pointers when the first of the previously proposed correcting methods mentioned above is applied to the flag map shown in Figure 4;

Figure 7 is a diagram showing an example of another flag map for use in an explanation of how the invention may be implemented;

Figures 8A to 8C are diagrams showing the states of pointers when a method embodying the invention is applied to the flag map shown in Figure 7; and

Figures 9A to 9C are diagrams showing the states of pointers when the second of the previously proposed error correcting methods is applied to the flag map shown in Figure 7.

An embodiment of the present invention will now be described with reference to the drawings. In this embodiment, the invention is applied to error detection and error correction in a case where digital audio signals in which one word is constituted by sixteen bits are recorded on a magnetic tape by, for example, rotary heads and the recorded digital audio signals are reproduced from the magnetic tape. However, the invention is not limited to magnetic recording and reproduction but may also be applied generally to any case in which errors are generated when a signal is transmitted through a transmission path.

(A) Code Block Arrangement

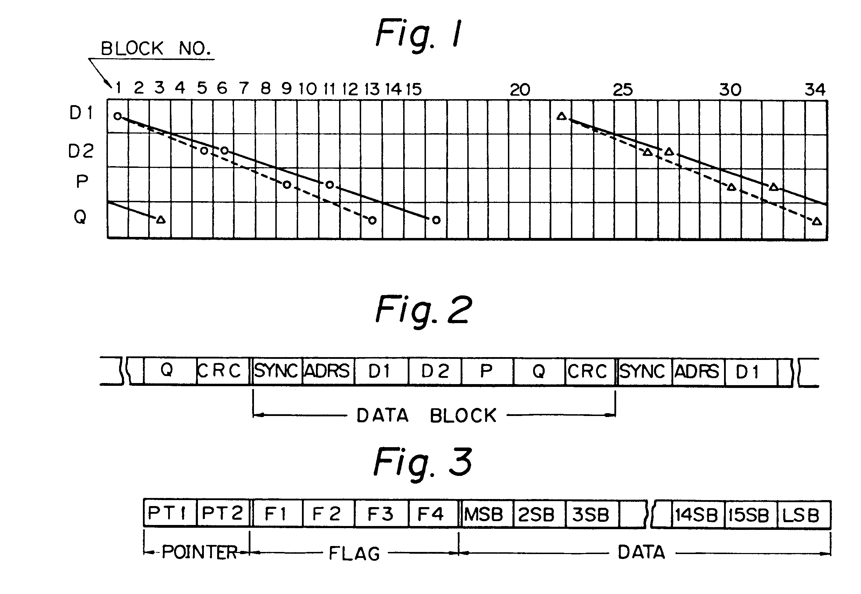

Figure 1 shows an arrangement of a code block of error correction codes that can be employed in an embodiment of the invention. One code block is constituted by a total of thirty-four data blocks, each data block comprising or consisting of four words (digital audio data comprising or consisting of two words D1 and D2 and parities comprising or consisting of two words P and Q). Cross-interleaving is performed so as to be completed within this code block.

The P series, which is used to carry out the error detection or error correction, is obtained by performing, for example, a simple parity coding process to total three words comprising or consisting of the words D1 and D2 and the parity Q which are included in the data blocks which are selected for every five data blocks as shown by solid lines in Figure 1. On the other hand, the Q series is derived by performing, for example, a simple parity coding process to total three words comprising or consisting of the words D1 and D2 and the parity P which are included in the data blocks which are selected for every four data blocks as indicated by broken lines in Figure 1. Namely, this embodiment is of the feedback type in which, when the parity of one of the P and Q series is formed, the parity of the other series is included. That is:

$$D1 (+) D2 (+) Q = P, \quad D1 (+) D2 (+) P = Q$$

where $(+)$ denotes (mod. 2) addition. Due to this coding process, each of $(2 \times 34)$ words included in the code blocks is included in the P and Q series, which are mutually different combinations.

In addition, the coding process also may be carried out by what is called a non-feedback type of process in which the parity Q is not included in the P series.

As shown in Figure 2, the respective words derived from the above-described coding process are recorded sequentially on a magnetic tape by rotary heads after a block synchronisation signal (SYNC) and a block address (ADRS) have been added to each data block and a CRC code for error checking has been added to the block address and the words D1 and D2 and parities P and Q.

The words reproduced from the magnetic tape are subjected to an error checking process by the CRC code and then written into a random access memory (RAM). The reproduced words of one code block written in the RAM are parity checked with respect to each series. In the RAM, the data of one word is constituted as shown in Figure 3.

In Figure 3, flags F1,F2,F3,F4 (four bits) and pointers PT1,PT2 (two bits) are added to the data, which comprises sixteen bits (from the most significant bit MSB to the least significant bit LSB). The flags F1,F2 are used for parity checking of the P series. The flags F3,F4 are used for parity checking of the Q series.

(B) Error detection and converting process from the flags to the pointers

(1) The flags F1 to F4 (four bits) provided for each word are preset to (1111).

(2) When no error is detected as a result of the execution of the CRC check with respect to each data block, the flags F1,F2,F3,F4 added to each word in this data block are set to (0101).

(3) A flag indicative of the presence or absence of a parity error (which flag is hereinafter referred to as a PER flag) is provided for each code block and is set to "0".

(4) In the case where the parity check of the P series is performed and no CRC error word exists in this series, if a parity error is detected the flags F1,F2 of the respective words of this series are set to (10) and the PER flag is set to "1". If no parity error is detected, the flags F1,F2 are set to "00".

(5) With respect to the Q series as well, processes similar to those described above are executed for the flags F3,F4 and PER flag.

When a parity error is detected at least once as a result of the above processes, the PER flag is set to "1". When the parity check is performed with respect to each of the P and Q series, if at least one or more words having CRC errors are included in these series, the flags of all words excluding the words having the CRC errors of those series are held at (01). Thus, the word having the flag status (01) indicates that the parity check could not be executed. No process is performed with regard to the PER flag. (6) The words when parity errors were detected in both the P and Q series, or when a parity error was detected in one of the P and Q series and the parity check could not be performed with regard to the other series, namely the words of which the flags F1,F2,F3,F4 are (1010), (1001), and (0110), are determined to be words having parity errors.

On the other hand, the words when a parity error was not detected in at least one of the P and Q series, namely the words in which the flags F1,F2,F3,F4 are (0000), (0001), (0010), (0100), and (1000), are decided to be correct words.

The flags of each word are set by the above-mentioned series of processes. The pointers comprising or consisting of the two bits PT1 and PT2 provided for each word instruct any one of three states, namely a state in which the words are correct (this state is referred to as S), a state in which the words are wrong (this state is referred to as E), and a state in that it is not determined yet whether the words have errors or are error-free (this state is referred to as N). The states can be determined by reference to the flags of the respective words which are included in each data block. (7) The flags of each word in the data block are checked. When a CRC error is detected, the flags of all words in this data block are (1111), and in such a case, the pointers of all words in this data block are set to E. In the case where no CRC error is detected in the respective words in the data block, and also if a word which was determined to have a parity error does not exist in the data block, the pointers of all words in this data block are set to S.

When at least one or more words which were determined to have parity errors exist in the data block, and also when a word which was decided to be correct does not exist in this data block, the pointers of all words in this data block are set to E and at the same time the PER flag is set to "0".

When at least one or more words which were determined to have parity errors exist in the data block, and also if at least one or more words which were decided to be correct exist in this data block, the pointers of all words in this data block are set to N.

By performing those processes, the pointers N are assigned to such respective words in the data block for which there exists a possibility such that a parity error has been overlooked due to incidental coincidence or correct words are erroneously regarded as words having parity errors.

According to the first previously proposed error detecting method described above, if at least one word which was determined to have a parity error exists, all words in the data block containing this error word are regarded as words having errors. Therefore, the pointers N in this embodiment of the invention are handled as the pointers E. According to the second previously proposed error detecting method, when at least one or more words having parity errors exist and also a word which was determined to be correct does not exist, all words in the data block are regarded as words having errors. Therefore, the pointers N in this embodiment of the invention are handled as the pointers S.

However, according to this embodiment of the invention, it is not determined whether the pointers N are set to E or S, but the subsequent correcting process is executed in this state.

In this stage, the state in which the PER flag is "1" denotes that a parity error has been detected (processes (4), (5)) and the data block in which the pointers are E (process (7)) does not exist and it is finally determined that the pointers N are to be handled as the pointers E.

(C) Correcting process using the pointers

(8) The pointers of each word are examined with respect to the P or Q series and the parity check which will be explained hereinafter is performed and also the error correction which will be explained later is carried out.

In the case where a parity error is detected in a series consisting of or comprising only the pointers S and N and including no pointer E, it is considered that a parity error has actually occurred in the words of the pointers N, so that the PER flag is set to "1".

On the other hand, when no parity error is detected in the series consisting of or comprising only the pointers S and N and including no pointer E, it is considered that only the words having the pointers N are correct or the overlooking of a parity error due to incidental coincidence has occurred in the words having the pointers N, so that no process is performed for the PER flag at this stage. Namely, the PER flag denotes that a parity error was detected in the series having only the pointers S and N one or more times during the correcting process. Therefore, in the case where the PER flag is "1" at the end of the error correction, all words having the pointers in the code block are handled as the words having the pointers E. When the PER flag is "0", all words having the pointers N are handled as words having the pointers S.

The error correction is carried out in accordance with the following method.

(i) In the case of words having the pointers E which were corrected by a series consisting of or comprising words including no pointer N, namely by a series containing one word having the pointers E and three words having the pointers S, those pointers are changed to S.

(ii) In the case of words having the pointers N which were corrected by a series including no pointer E, namely by a series containing one word having the pointer N and three words having the pointers S, those pointers are also changed to S.

This method is effective when the pointers N are handled as the pointers E. In the case where only one word having the pointers N exists among the words having the pointers S, if this word is determined to be a correct word as a result of the parity check, only this word having the pointers N is a correct word. Therefore, the pointers are changed from N to S. On the other hand, when a parity error is detected by the parity check, a parity error has occurred in the word having the pointers N. Thus, the PER flag is set to "1" and at the same time the word having the pointers N is corrected since only one word having the pointers N exists. Then, the pointers are changed from N to S.

(iii) In the case of words having the pointers E which were corrected by a series consisting of or comprising words which include at last one or more pointers N, for example by a series containing two pointers N, one pointer S, and one pointer E, the pointer E is changed to N.

This method is effective when the pointers N are handled as the pointers S. In the case of the series which has the pointers S and in which only one pointer E exists in one or more pointers N, the word having the pointer E is corrected by the remaining words having the pointers N and S and the pointer E is changed to N. Due to this, in the case where the pointer N is actually the pointer S, this word is accurately corrected. When the pointer N is actually the pointer E, this word is handled as a word having an error. Consequently, miscorrection can be prevented.

(iv) Although not error correction, in the case where a parity error is detected in a series consisting of or comprising words including two or more pointers N and no pointer E, it is considered that a parity error has occurred in the word having at least one or more pointers N among them. Therefore, the PER flag is set to "1". When no parity error is detected, no process is executed and the PER flag is unchanged.

The above-mentioned correcting methods are summarised in the following table.

| Number of pointers | | | Parity check | PER flag | Correcting process | |
|---|---|---|---|---|---|---|
| E | N | S | | | Data | Pointer |
| 0 | 0 | x | x | / | / | / |
| 0 | 1 | x | No error | / | / | N → S |
| 0 | 1 | x | Error | Set | Correct N | N → S |
| 0 | 2> | x | No error | / | / | / |
| 0 | 2> | x | Error | Set | / | / |
| 1 | 0 | x | x | / | Correct E | E → S |
| 1 | 1> | x | x | / | Correct E | E → N |
| 2> | x | x | x | / | / | / |

In the above table, 2> denotes two or more, x indicates that there is no relation, and / means that no process is performed.

The above processes are executed with respect to all series of the respective P and Q series and these processes are repeatedly carried out with regard to the P and Q series.

(D) Conversion from the pointers N to the pointers S or E

(9) When the PER flag is "1" at the end of the error correction, it is decided to handle the pointers of all words having the pointers N in the code block as the pointers E. When the PER flag is "0", it is determined to handle the pointers N of the words as the pointers S, similarly to the above.

(10) The pointers are checked with respect to all words excluding the parity words of P and Q. In the case of the words having the pointers N, the pointers N are changed to the pointers E or S.

(11) After completion of the above processes with respect to one code block shown in Figure 1, the procedure advances to the next code block and the processes are executed in a manner similar to the above.

(E) Modification of the embodiment of the invention

As a result of the parity check in the foregoing processes (4) and (5), if no parity error is detected at all and the PER flag is held to "0" (most cases come within this proviso), the correction is performed by an ordinary method without executing the process (6) and the subsequent processes. Due to this, the time necessary for the processes (7) and (10) can be used for the error correcting process and the number of repetition times of the error correction increases, so that the correcting capability can be improved. However, in this case, it is necessary slightly to increase the memory capacity of a read only memory (ROM) containing the software for the correction by way of an ordinary method and slightly to increase the hardware for the branching process.

In the above case, if only one word having a CRC error exists in the P or Q series when the parity check is carried out in the processes (4) and (5) so as further to increase the number of correction times, this word may be corrected and the flags F1,F2,F3,F4 may be rewritten to another pattern such as (1100) or the like which is not used. When a parity error is detected, there is a possibility of miscorrection. Therefore, to invalidate such miscorrection, the flags (1100) are also handled as in the case where there is a CRC error in the process (7). On the other hand, if no parity error is detected, the words are handled as correct words.

Although four bits are provided as the flags and two bits are provided as the pointers for each word, respectively, these flags and pointers are not used simultaneously. Therefore, the memory capacity needed may be reduced by commonly using four bits for the flags as the bits indicative of the pointers.

Further, with regard to the pointers N representing that it has not been determined whether the words have errors or are correct, a plurality of pointers N1 to Nm may be used in correspondence to a degree of possibility of errors.

It is possible to use other codes than simple parity as the error correction code. For example, an error correction code such as Reed-Solomon code, b-adjacent code, or the like, may be used. An error correction code which can correct two or more words also may be used.

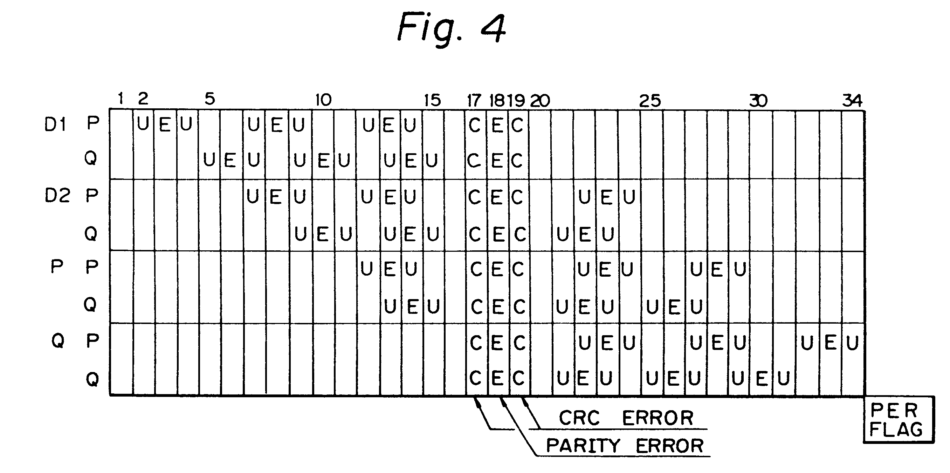

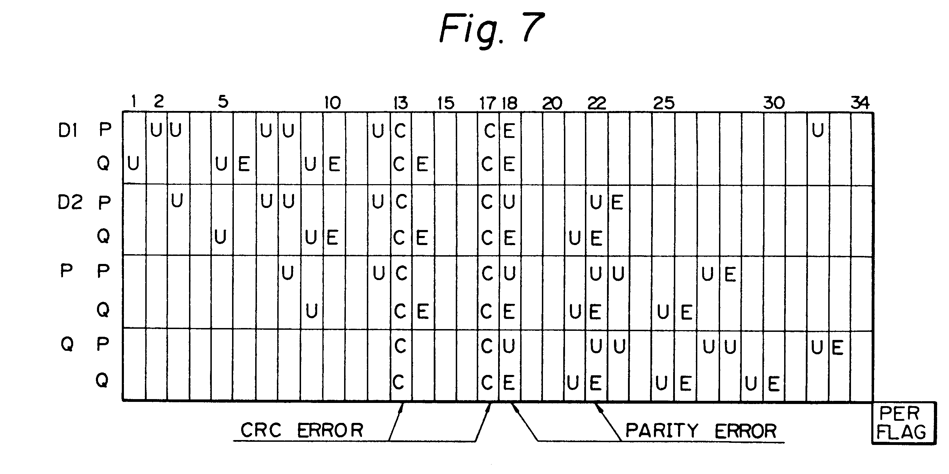

Figures 4 and 7 show examples of flag maps of a code block having errors and are used for explaining the difference between ways in which the present invention may be implemented and the previously proposed technology.

Figure 4 shows an example of a flag map useful for explaining how the invention may be implemented. It is assumed that one code block comprises (4 x 32) words and that four flag bits comprising the flags F1,F2 for the P series and the flags F3,F4 for the Q series are added to each word. In Figure 4, a reference symbol written at the upper position of each word denotes the states of the flags F1,F2 and a reference symbol written at the lower position indicates the states of the flags F3,F4. The symbols employed in Figures 4 and 7 have the following meanings:

Blank    = Flags (00): Correct

U       = Flags (01): Parity check is impossible.

E       = Flags (10): A parity error is detected.

C       = Flags (11): A CRC check error is detected.

In this example, CRC errors are detected in the 17th and 19th data blocks and a parity error is detected in the 18th data block. The flag map shown in Figure 4 can be obtained by executing the processes (1) to (5).

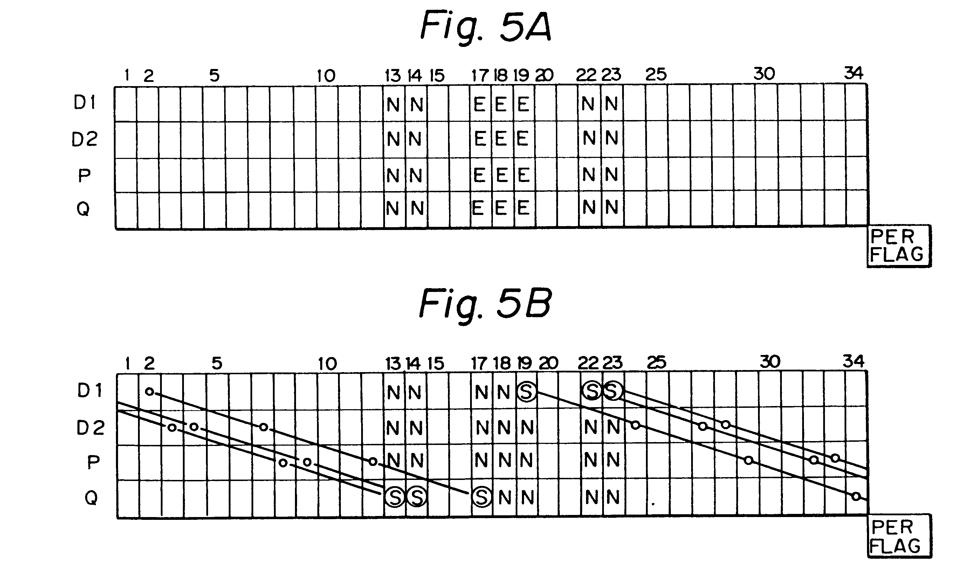

Figure 5A shows a pointer map resulting from execution of the processes (1) to (7). Namely, according to the embodiment of the invention, in the case where any one of EE, EU, and UE represents the states of the flags F1,F2 and F3,F4 in each data block and at the same time there is one blank in each data block, the pointers of the words are set to N. Thus, as shown in Figure 5A, the pointers of all words in the 13th, 14th, 22nd, and 23rd data blocks become N. In addition, the pointers of all words in the 17th to 19th data blocks become E.

The correcting process (8) is then performed. Figure 5B shows a pointer map after completion of a first correction with regard to the P series. The pointers of the corrected words are written as S. The PER flag is "0". That is, due to the execution of the correcting process (8), the pointers corrected in the series including no pointer N change from E to S.

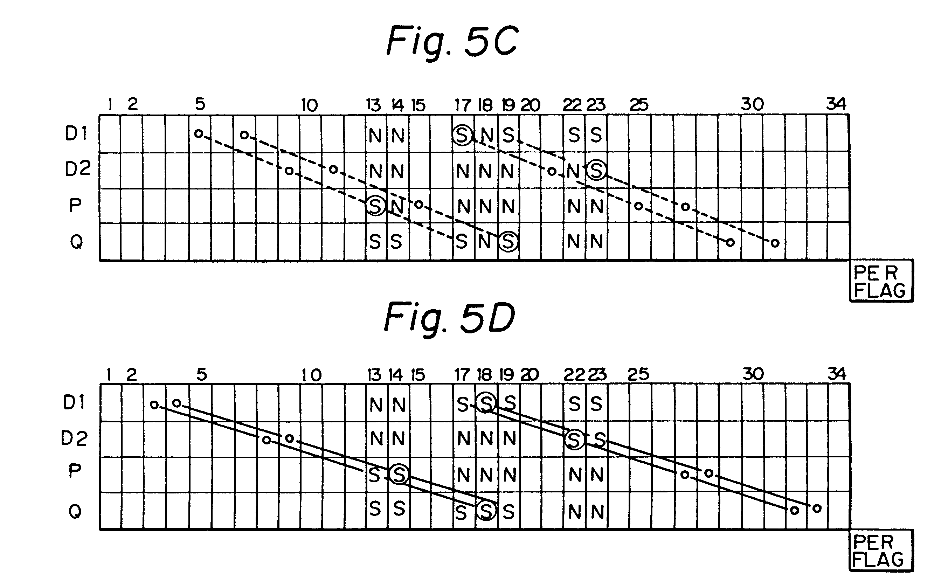

Next, a first correction is carried out for the Q series and its pointer map is shown in Figure 5C. The PER flag is "0".

Further, Figure 5D shows a pointer map when a second correction has been performed for the P series. The PER flag is "0".

Subsequently, the error correction is repeatedly executed with respect to each series. The PER flag is checked when the error correction is finished and, when it is "0", the words of the pointers N in the code block are all handled as S.

(F) Comparison between the embodiment of the present invention and the first previously proposed method

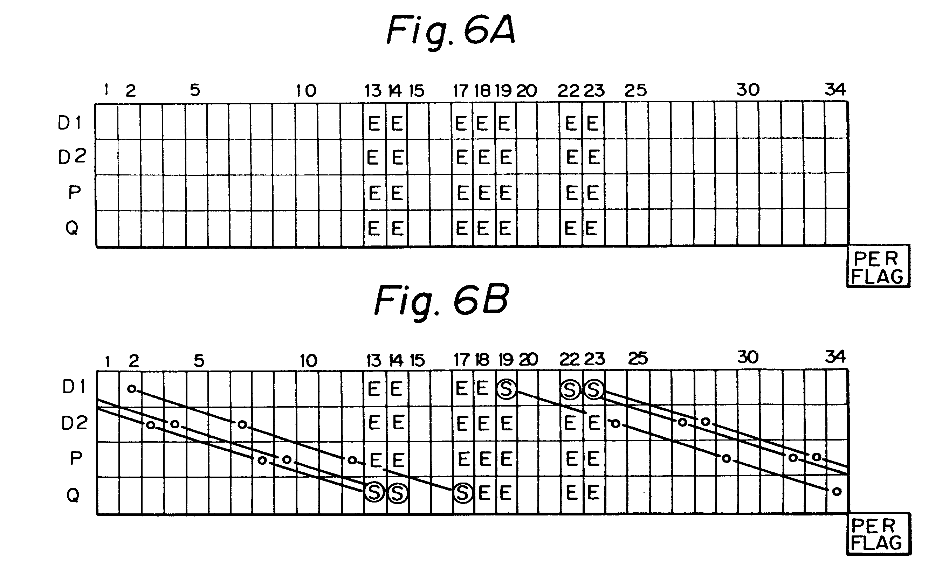

To facilitate understanding of the embodiment of the present invention, an explanation will now be given with reference to Figures 6A to 6C of a case where the first previously proposed method is applied to errors similar to those in Figure 4.

According to the first method, when any one of EE, EU, and UE represents the states of the flags F1,F2 and F3,F4 in the data block, the pointers are set to E. Therefore, as shown in Figure 6A, it is determined that all words in the 13th, 14th, 17th to 19th, 22nd, and 23rd data blocks have errors and their pointers become E. Correcting processes similar to those used in the embodiment of the invention are then executed. Figure 6B shows a pointer map after completion of the execution of a first correction by a P series. The PER flag is "0".

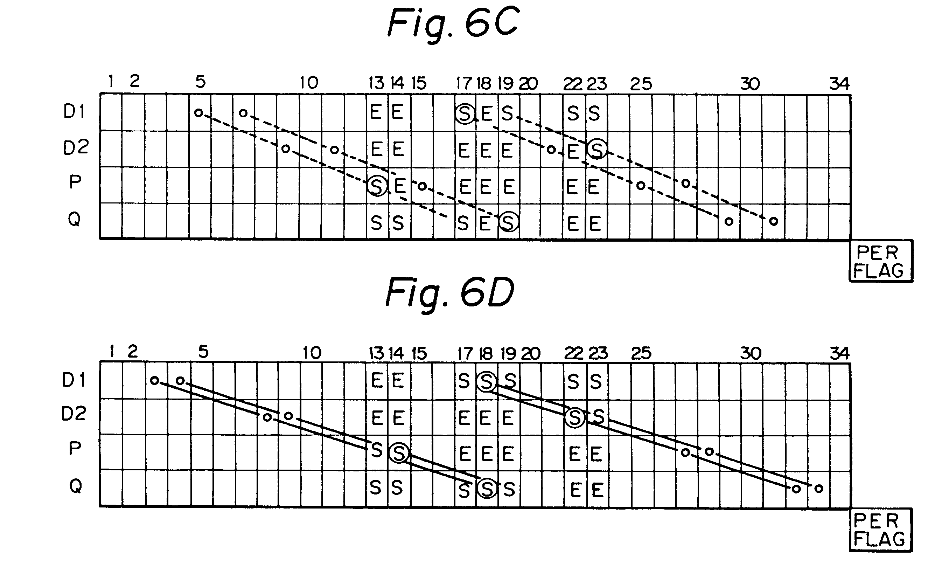

Figure 6C shows a pointer map after a first correction by the Q series. The PER flag is "0".

Figure 6D shows a pointer map after a second correction by the P series. The PER flag is "0".

At this stage, fourteen words are determined to have errors and these words are formed by, for example, an interpolating process.

(G) Comparison between the embodiment of the present invention and the second previously proposed method

Figure 7 shows an example of a flag map different from Figure 4 and which is used for explaining how the invention may be implemented. In this example, CRC errors are detected in the 13th and 17th data blocks and parity errors are detected in the 18th and 22nd data blocks. Further, this example relates to the case where the first word D1 of the 22nd data block incidentally coincides with an inherent error-free word. In this case, by executing the processes up to (5) as described above, this flag map is derived.

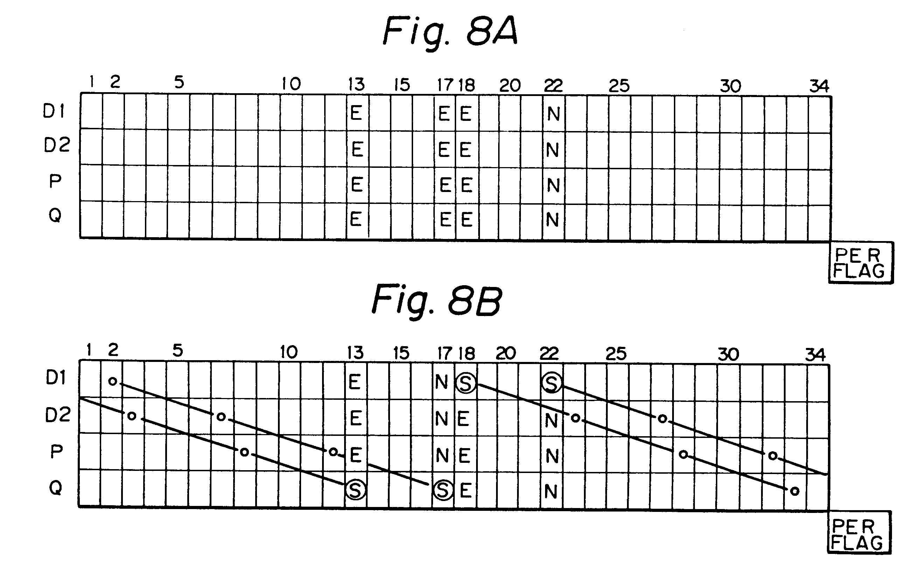

The result of the execution of the process (7) is shown in a pointer map of Figure 8A. Symbols used in this pointer map have the same meanings as mentioned above.

In this embodiment of the invention, in the case where any one of EE, EU, and UE represents the status of the flags F1,F2 and F3,F4 in the data block and at the same time at least one blank exists, the pointers are set to N. Therefore, as shown in Figure 8A, the pointers of all words in the 22nd data block become N.

The correcting process (8) is then performed. The result of execution of a first correction of the P series is shown in a pointer map of Figure 8B. The PER flag is "0".

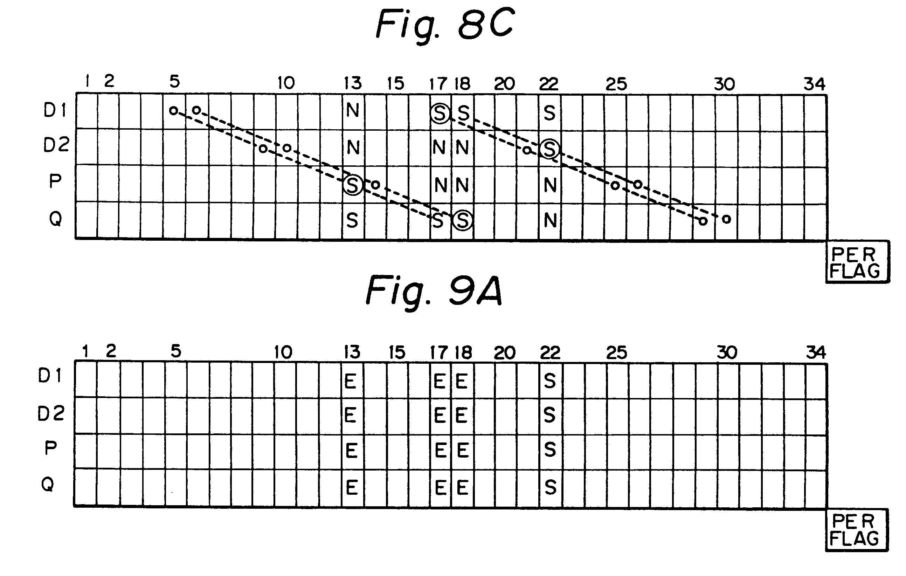

A first correction of the Q series is then performed and the result is shown in a pointer map of Figure 8C. The PER flag is "0". Since the PER flag is "1" at the end of the correction, the words of the pointers N are handled as errors. Therefore, eight words of the pointers N are subjected to an interpolating process.

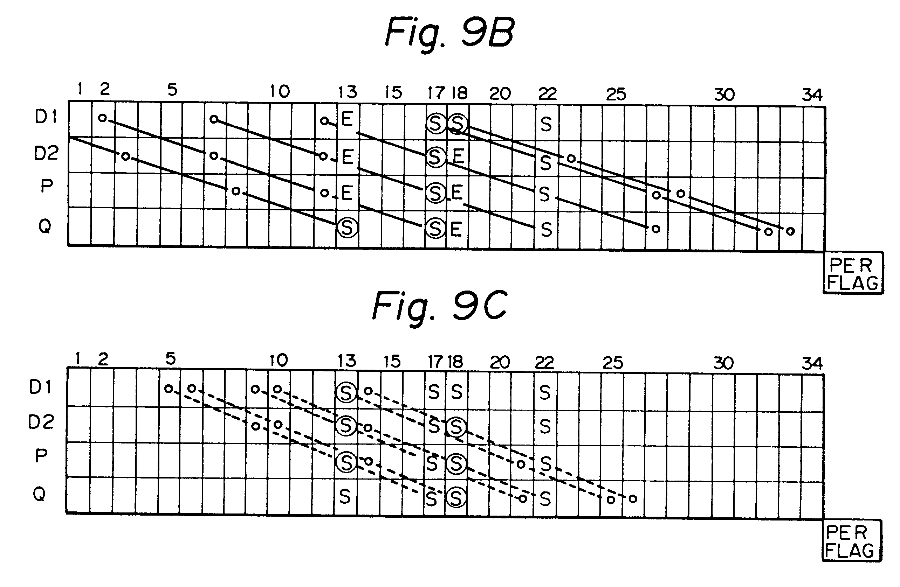

Similarly, with reference to the pointer maps of Figures 9A to 9C, an explanation will be made with respect to the case where the second previously proposed method is applied to errors similar to those in Figure 7.

It is assumed that the PER flag in the second method is set to "1" when a parity error was detected in the P or Q series of the words having the pointers S.

In this example, the first word D1 in the 22nd data block is a correct word, so that the pointers S are set. As shown in Figure 9A, therefore, a parity error is overlooked with regard to the other three words.

A correcting process similar to that used in the embodiment of the invention is then executed. Figure 9A shows a pointer map resulting from a first correction by the P series. The PER flag is "0".

Figure 9A shows the result of a first correction by the Q series. The PER flag is "1". As will be understood from Figure 9C, the words of which a parity error was overlooked are regarded as correct words. Therefore, they are used for correction and the miscorrection increases. Since those miscorrected words are not obviously interpolated, an abnormal noise is generated. In addition, since the PER flag is "1", it is necessary again to perform the correction.

**Claims**

1. A method of detecting error words in a data block formed by a plurality of words each comprising a predetermined number of bits of a digital signal, a predetermined number of such data blocks forming a matrix of a code block, each data block having a first error check code (CRC), a second error check code (P) being produced by one series in the code block matrix, and a third error check code (Q) being produced by another series in the code block matrix, the method comprising the steps of:

    executing an error check in each data block by the use of the first error check code (CRC) and setting an error pointer (E) to all the words in the respective data block when an error is detected;

    executing an error check in each data block in which no error has been detected by the first error check code (CRC) using the second error check code (P) and the third error check code (Q); and

    in accordance with the execution of the error check using the second and third error check codes (P,Q), setting the pointer for each word in each data block either to a correct pointer (S) indicating that each of the words in the data block is correct, or to the error pointer (E) indicating that each of the words has an error, or to a neutral pointer (N) indicating that no determination has been made whether each of the words is correct or has an error.

2. A method according to claim 1, wherein the step of setting the pointer for each word in each data block comprises:

    in the case that no error is found to exist in the data block, setting the correct pointer (S) to all the words in the data block;

    in the case that one or more words determined to have errors exist in the data block and also that no error-free word is found to exist in the data block, setting the error pointer (E) to all the words in the data block; and

    in the case that one or more words determined to have errors exist in the data block and also that one or more error-free words are found to exist in the data block, setting the neutral pointer (N) to all the words in the data block.

3. A method according to claim 1 or claim 2, including, after the pointer setting step, executing error correction repeatedly by the use of the second and third error check codes (P,Q), whereby each word with either the error pointer (E) or the neutral pointer (N) corrected using only a word with the correct pointer (S) is then set to have the correct pointer (S), and each word with the error pointer (E) corrected using a word with the neutral pointer (N) is then set to have the neutral pointer (N).

4. A method according to claim 3, including the step of, in the case where an error is detected at least once except for a word designated by the error pointer (E) when the error correction is performed by the use of the second and third error check codes (P,Q), setting the error pointer (E) to all the words in the data block including the error word when the neutral pointer (N) is set to a word in the data block.

5. A method according to any one of the preceding claims, wherein the first error check code is a cyclic redundancy check code (CRC).

6. A method according to any one of claims 1 to 5, wherein the second and third error check codes (P,Q) are parity codes.

7. A method according to any one of claims 1 to 5, wherein the second and third error check codes are Reed-Solomon codes.

8. Apparatus for detecting error words in a data block formed by a plurality of words each comprising a predetermined number of bits of a digital signal, a predetermined number of such data blocks forming a matrix of a code block, each data block having a first error check code (CRC), a second error check code (P) being produced by one series in the code block matrix, and a third error check code (Q) being produced by another series in the code block matrix, the apparatus being operative to carry out a method which comprises the steps of:

    executing an error check in each data block by the use of the first error check code (CRC) and setting an error pointer (E) to all the words in the respective data block when an error is detected;

executing an error check in each data block in which no error has been detected by the first error check code (CRC) using the second error check code (P) and the third error check code (Q); and

in accordance with the execution of the error check using the second and third error check codes (P,Q), setting the pointer for each word in each data block either to a correct pointer (S) indicating that each of the words in the data block is correct, or to the error pointer (E) indicating that each of the words has an error, or to a neutral pointer (N) indicating that no determination has been made whether each of the words is correct or has an error.

9. Apparatus according to claim 8, wherein the step of setting the pointer for each word in each data block comprises:

in the case that no error is found to exist in the data block, setting the correct pointer (S) to all the words in the data block;

in the case that one or more words determined to have errors exist in the data block and also that no error-free word is found to exist in the data block, setting the error pointer (E) to all the words in the data block; and

in the case that one or more words determined to have errors exist in the data block and also that one or more error-free words are found to exist in the data block, setting the neutral pointer (N) to all the words in the data block.

10. Apparatus according to claim 8 or claim 9, in which the operative method includes, after the pointer setting step, executing error correction repeatedly by the use of the second and third error check codes (P,Q), whereby each word with either the error pointer (E) or the neutral pointer (N) corrected using only a word with the correct pointer (S) is then set to have the correct pointer (S), and each word with the error pointer (E) corrected using a word with the neutral pointer (N) is then set to have the neutral pointer (N).

11. Apparatus according to claim 10, in which the operative method includes the step of, in the case where an error is detected at least once except for a word designated by the error pointer (E) when the error correction is performed by the use of the second and third error check codes (P,Q), setting the error pointer (E) to all the words in the data block including the error word when the neutral pointer (N) is set to a word in the data block.

12. Apparatus according to any one of claims 8 to 11, wherein the first error check code is a cyclic redundancy check code (CRC).

13. Apparatus according to any one of claims 8 to 12, wherein the second and third error check codes (P,Q) are parity codes.

14. Apparatus according to any one of claims 8 to 12, wherein the second and third error check codes are Reed-Solomon codes.

**Revendications**

1. Procédé de détection de mots en erreur dans un bloc de données formé par une pluralité de mots, chacun comprenant un nombre prédéterminé de bits d'un signal numérique, un nombre prédéterminé de ces blocs de données formant une matrice d'un bloc de code, chaque bloc de données ayant un premier code de contrôle d'erreur (CRC), un second code de contrôle d'erreur (P) étant produit par une série dans la matrice de bloc de code et un troisième code de contrôle d'erreur (Q) étant produit par une autre série dans la matrice de bloc de code, le procédé comprenant les étapes de :

exécution d'un contrôle d'erreur dans chaque bloc de données en utilisant le premier code de contrôle d'erreur (CRC) et en établissant un pointeur d'erreur (E) pour tous les mots du bloc de données respectif lorsqu'une erreur est détectée ;

exécution d'un contrôle d'erreur dans chaque bloc de données dans lequel aucune erreur n'a été détectée par le premier code de contrôle d'erreur (CRC) en utilisant le second code de contrôle d'erreur (P) et le troisième code de contrôle d'erreur (Q) ; et

en relation avec l'exécution du contrôle d'erreur qui utilise les second et troisième codes de contrôle d'erreur (P, Q), établissement du pointeur pour chaque mot de chaque bloc de données soit à un pointeur correct (S) qui indique que chacun des mots du bloc de données est correct, soit à un pointeur d'erreur (E) qui indique que chacun des mots a une erreur, soit à un pointeur neutre (N) qui indique qu'aucune détermination n'a été faite pour savoir si chacun des mots est correct ou a une erreur.

2. Procédé selon la revendication 1, dans lequel l'étape d'établissement du pointeur pour chaque mot de chaque bloc de données comprend :

dans le cas où aucune erreur ne s'avère exister dans le bloc de données, l'établissement du pointeur correct (S) pour tous les mots du bloc de données ;

dans le cas où un ou plusieurs mots déterminés comme ayant des erreurs existent dans le bloc de données et également dans le cas où aucun mot exempt d'erreur ne s'avère exister dans le bloc de données, l'établissement du pointeur d'erreur (E) pour tous les mots du bloc de données ; et

dans le cas où un ou plusieurs mots déterminés comme ayant des erreurs existent dans le bloc de données et également dans le cas où un ou plusieurs mots exempts d'erreur s'avèrent exister dans le bloc de données, l'établissement du pointeur neutre (N) pour tous les mots du bloc de données.

3. Procédé selon la revendication 1 ou 2, incluant, après l'étape d'établissement de pointeurs, l'exécution d'une correction d'erreur de manière répétée en utilisant les second et troisième codes de contrôle d'erreur (P, Q) et ainsi, chaque mot avec soit le pointeur d'erreur (E), soit le pointeur neutre (N) qui est corrigé en utilisant seulement un mot avec le pointeur correct (S) est ensuite établi pour avoir le pointeur correct (S) et chaque mot avec le pointeur d'erreur (E) qui est corrigé en utilisant un mot avec le pointeur neutre (N) est ensuite établi pour avoir le pointeur neutre (N).

4. Procédé selon la revendication 3, incluant l'étape de, dans le cas où une erreur est détectée au moins une fois à l'exception d'un mot indiqué par le pointeur d'erreur (E) lorsque la correction d'erreur est effectuée en utilisant les second et troisième codes de contrôle d'erreur (P, Q), établissement du pointeur d'erreur (E) pour tous les mots du bloc de données incluant le mot d'erreur lorsque le pointeur neutre (N) est établi au niveau d'un mot du bloc de données.

5. Procédé selon l'une quelconque des revendications précédentes, dans lequel le premier code de contrôle d'erreur est un code de contrôle de redondance cyclique (CRC).

6. Procédé selon l'une quelconque des revendications 1 à 5, dans lequel les second et troisième codes de contrôle d'erreur (P, Q) sont des codes de parité.

7. Procédé selon l'une quelconque des revendications 1 à 5, dans lequel les second et troisième codes de contrôle d'erreur sont des codes Reed-Solomon.

8. Appareil pour détecter des mots d'erreur dans un bloc de données formé par une pluralité de mots, chacun comprenant un nombre prédéterminé de bits d'un signal numérique, un nombre prédéterminé de ces blocs de données formant une matrice d'un bloc de code, chaque bloc de données ayant un premier code de contrôle d'erreur (CRC), un second code de contrôle d'erreur (P) étant produit par une série dans la matrice de bloc de code et un troisième code de contrôle d'erreur (Q) étant produit par une autre série dans la matrice de bloc de code, l'appareil étant opérationnel pour mettre en oeuvre le procédé qui comprend les étapes de :

exécution d'un contrôle d'erreur dans chaque bloc de données en utilisant le premier code de contrôle d'erreur (CRC) et en établissant un pointeur d'erreur (E) pour tous les mots du bloc de données respectif lorsqu'une erreur est détectée ;

exécution d'un contrôle d'erreur dans chaque bloc de données dans lequel aucune erreur n'a été détectée par le premier code de contrôle d'erreur (CRC) en utilisant le second code de contrôle d'erreur (P) et le troisième code de contrôle d'erreur (Q) ; et

en relation avec l'exécution du contrôle d'erreur qui utilise les second et troisième codes de contrôle d'erreur (P, Q), établissement du pointeur pour chaque mot de chaque bloc de données soit à un pointeur correct (S) qui indique que chacun des mots du bloc de données est correct, soit à un pointeur d'erreur (E) qui indique que chacun des mots a une erreur, soit à un pointeur neutre (N) qui indique qu'aucune détermination n'a été faite pour savoir si chacun des mots est correct ou a une erreur.

**9.** Appareil selon la revendication 8, dans lequel l'étape d'établissement du pointeur pour chaque mot de chaque bloc de données comprend :

dans le cas où aucune erreur ne s'avère exister dans le bloc de données, l'établissement du pointeur correct (S) pour tous les mots du bloc de données ;

dans le cas où un ou plusieurs mots déterminés comme ayant des erreurs existent dans le bloc de données et également dans le cas où aucun mot exempt d'erreur ne s'avère exister dans le bloc de données, l'établissement du pointeur d'erreur (E) pour tous les mots du bloc de données ; et

dans le cas où un ou plusieurs mots déterminés comme ayant des erreurs existent dans le bloc de données et également dans le cas où un ou plusieurs mots exempts d'erreur s'avèrent exister dans le bloc de données, établissement du pointeur neutre (N) pour tous les mots du bloc de données.

**10.** Appareil selon la revendication 8 ou 9, dans lequel le procédé opérationnel inclut, après l'étape d'établissement de pointeurs, l'exécution d'une correction d'erreur de manière répétée en utilisant les second et troisième codes de contrôle d'erreur (P, Q) et ainsi, chaque mot avec soit le pointeur d'erreur (E), soit le pointeur neutre (N) qui est corrigé en utilisant seulement un mot avec le pointeur correct (S) est ensuite établi pour avoir le pointeur correct (S) et chaque mot avec le pointeur d'erreur (E) qui est corrigé en utilisant un mot avec le pointeur neutre (N) est ensuite établi pour avoir le pointeur neutre (N).

**11.** Appareil selon la revendication 10, dans lequel le procédé opérationnel inclut l'étape de, dans le cas où une erreur est détectée au moins une fois à l'exception d'un mot indiqué par le pointeur d'erreur (E) lorsque la correction d'erreur est effectuée en utilisant les second et troisième codes de contrôle d'erreur (P, Q), établissement du pointeur d'erreur (E) pour tous les mots du bloc de données incluant le mot d'erreur lorsque le pointeur neutre (N) est établi au niveau d'un mot du bloc de données.

**12.** Appareil selon l'une quelconque des revendications 8 à 11, dans lequel le premier code de contrôle d'erreur est un code de contrôle de redondance cyclique (CRC).

**13.** Appareil selon l'une quelconque des revendications 8 à 12, dans lequel les seconds et troisièmes codes de contrôle d'erreur (P, Q) sont des codes de parité.

**14.** Appareil selon l'une quelconque des revendications 8 à 12, dans lequel les second et troisième codes de contrôle d'erreur sont des codes Reed-Solomon.

**Patentansprüche**

**1.** Verfahren zum Ermitteln von fehlerhaften Wörtern in einem Datenblock, der aus einer Mehrzahl von Wörtern mit jeweils einer vorbestimmten Anzahl von Bits eines Digitalsignals gebildet ist, wobei eine vorbestimmte Anzahl solcher Datenblöcke eine Kodeblock-Matrix bildet und jeder Datenblock einen ersten Fehlerprüfkode (CRC), einen durch eine Reihe in der Kodeblock-Matrix erzeugten zweiten Fehlerprüfkode (P) und einen durch eine andere Reihe in der Kodeblock-Matrix erzeugten dritten Fehlerprüfkode (Q) aufweist,

mit den Verfahrensschritten:

Durchführen einer Fehlerprüfung in jedem Datenblock unter Benutzung des ersten Fehlerprüfkodes (CRC) und Setzen eines Fehlerzeigers (E) auf alle Wörter in dem betreffenden Datenblock, wenn ein Fehler ermittelt wird,

Durchführen einer Fehlerprüfung unter Benutzung des zweiten Fehlerprüfkodes (P) und des dritten Fehlerprüfkodes (Q) in allen denjenigen Datenblöcke, in denen mit dem ersten Fehlerprüfkode (CRC) kein Fehler ermittelt wurde,

nach Maßgabe der Durchführung der Fehlerprüfung unter Verwendung des zweiten und des dritten Fehlerprüfkodes (P, Q) Setzen des Zeigers für jedes Wort in jedem Datenblock entweder auf einen Korrekt-Zeiger (S), der anzeigt, daß jedes der Wörter in dem Datenblock korrekt ist, oder auf den Fehler-Zeiger (E), der anzeigt, daß jedes der Wörter einen Fehler hat, oder auf einen Neutral-Zeiger (N), der anzeigt, daß nicht festgestellt wurde, ob jedes der Wörter korrekt ist oder einen Fehler hat.

**2.** Verfahren nach Anspruch 1, bei dem der Verfahrensschritt des Setzens des Zeigers für jedes Wort in jedem Datenblock folgende Verfahrensschritte umfaßt:

Setzen des Korrekt-Zeigers (S) auf alle Wörter in dem Datenblock für den Fall, daß in dem

12

Datenblock kein Fehler vorhanden ist,

Setzen des Fehler-Zeigers (E) auf alle Wörter in dem Datenblock für den Fall, daß in dem Datenblock ein oder mehrere Wörter vorhanden sind, bei denen Fehler festgestellt wurden, und für den Fall, daß festgestellt wurde, daß in dem Datenblock kein fehlerfreies Wort vorhanden ist,

Setzen des Neutral-Zeigers (N) auf alle Wörter in dem Datenblock für den Fall, daß in dem Datenblock ein oder mehrere Wörter vorhanden sind, von denen festgestellt wurde, daß sie Fehler haben, sowie für den Fall, daß festgestellt wurde, daß in dem Datenblock ein oder mehrere fehlerfreie Wörter vorhanden sind.

3. Verfahren nach Anspruch 1 oder 2, bei dem nach dem Verfahrensschritt des Zeigersetzens wiederholt eine Fehlerkorrektur durchgeführt wird, bei der der zweite und dritte Fehlerprüfkode (P, Q) benutzt werden, wodurch jedes Wort, das entweder den Fehler-Zeiger (E) oder den Neutral-Zeiger (N) aufweist und das unter Benutzung nur eines Wortes mit dem Korrekt-Zeiger (S) korrigiert wurde, dann so gesetzt wird, daß es den Korrekt-Zeiger (S) aufweist, und jedes Wort, das den Fehler-Zeiger (E) aufweist und das unter Benutzung eines Wortes mit dem Neutral-Zeiger (N) korrigiert wurde, dann so gesetzt wird, daß es den Neutral-Zeiger (N) aufweist.

4. Verfahren nach Anspruch 3, mit dem Verfahrensschritt, daß für den Fall, daß nach Durchführung der Fehlerkorrektur unter Verwendung des zweiten und dritten Fehlerprüfkodes (P, Q) wenigstens einmal ein Fehler außer für ein durch den Fehler-Zeiger (E) qekennzeichnetes Wort ermittelt wird, der Fehler-Zeiger (E) auf alle Wörter des das fehlerhafte Wort enthaltenden Datenblocks gesetzt wird, wenn der Neutralzeiger (N) auf ein Wort in dem Datenblock gesetzt ist.

5. Verfahren nach einem der vorhergehenden Ansprüche, bei dem der erste Fehlerprüfkode ein zyklischer Redundanzprüfkode (CRC) ist.

6. Verfahren nach einem der Ansprüche 1 bis 5, bei dem der zweite und der dritte Fehlerprüfkode (P, Q) Paritätskodes sind.

7. Verfahren nach einem der Ansprüche 1 bis 5, bei dem der zweite und der dritte Fehlerprüfkode Reed-Solomon-Kodes sind.

8. Vorrichtung zum Ermitteln von fehlerhaften Wörtern in einem Datenblock, der aus einer Mehrzahl von Wörtern mit jeweils einer vorbestimmten Anzahl von Bits eines Digitalsignals gebildet ist, wobei eine vorbestimmte Anzahl solcher Datenblöcke eine Kodeblock-Matrix bildet und jeder Datenblock einen ersten Fehlerprüfkode (CRC), einen durch eine Reihe in der Kodeblock-Matrix erzeugten zweiten Fehlerprüfkode (P) und einen durch eine andere Reihe in der Kodeblock-Matrix erzeugten dritten Fehlerprüfkode (Q) aufweist,

wobei die Vorrichtung ein Betriebsverfahren ausführt, das folgende Verfahrensschritte umfaßt:

Durchführen einer Fehlerprüfung in jedem Datenblock unter Benutzung des ersten Fehlerprüfkodes (CRC) und Setzen eines Fehlerzeigers (E) auf alle Wörter in dem betreffenden Datenblock, wenn ein Fehler ermittelt wird,

Durchführen einer Fehlerprüfung unter Benutzung des zweiten Fehlerprüfkodes (P) und des dritten Fehlerprüfkodes (Q) in allen denjenigen Datenblöcke, in denen mit dem ersten Fehlerprüfkode (CRC) kein Fehler ermittelt wurde,

nach Maßgabe der Durchführung der Fehlerprüfung unter Verwendung des zweiten und des dritten Fehlerprüfkodes (P, Q) Setzen des Zeigers für jedes Wort in jedem Datenblock entweder auf einen Korrekt-Zeiger (S), der anzeigt, daß jedes der Wörter in dem Datenblock korrekt ist, oder auf den Fehler-Zeiger (E), der anzeigt, daß jedes der Wörter einen Fehler hat, oder auf einen Neutral-Zeiger (N), der anzeigt, daß nicht festgestellt wurde, ob jedes der Wörter korrekt ist oder einen Fehler hat.

9. Vorrichtung nach Anspruch 8, bei der der Verfahrensschritt des Setzens des Zeigers für jedes Wort in jedem Datenblock folgende Verfahrensschritte umfaßt:

Setzen des Korrekt-Zeigers (S) auf alle Wörter in dem Datenblock für den Fall, daß in dem Datenblock kein Fehler vorhanden ist,

Setzen des Fehler-Zeigers (E) auf alle Wörter in dem Datenblock für den Fall, daß in dem Datenblock ein oder mehrere Wörter vorhanden sind, bei denen Fehler festgestellt wurden, und für den Fall, daß festgestellt wurde, daß in dem Datenblock kein fehlerfreies Wort vorhanden ist.

Setzen des Neutral-Zeigers (N) auf alle Wörter in dem Datenblock für den Fall, daß in dem Datenblock ein oder mehrere Wörter vorhanden sind, von denen festgestellt wurde, daß sie Fehler haben, sowie für den Fall, daß festgestellt wurde, daß in dem Datenblock ein oder mehrere fehlerfreie Wörter vorhanden sind.

10. Vorrichtung nach Anspruch 8 oder 9, bei der das Betriebsverfahren beinhaltet, daß nach dem Verfahrensschritt des Zeigersetzens wiederholt eine Fehlerkorrektur durchgeführt wird, bei der der zweite und dritte Fehlerprüfkode (P, Q) benutzt werden, wodurch jedes Wort, das entweder den Fehler-Zeiger (E) oder den Neutral-Zeiger (N) aufweist und das unter Benutzung nur eines Wortes mit dem Korrekt-Zeiger (S) korrigiert wurde, dann so gesetzt wird, daß es den Korrekt-Zeiger (S) aufweist, und jedes Wort, das den Fehler-Zeiger (E) aufweist und das unter Benutzung eines Wortes mit dem Neutral-Zeiger (N) korrigiert wurde, dann so gesetzt wird, daß es den Neutral-Zeiger (N) aufweist.

11. Vorrichtung nach Anspruch 10, bei der das Betriebsverfahren den Verfahrensschrit beinhaltet, daß für den Fall, daß nach der Durchführung der Fehlerkorrektur unter Verwendung des zweiten und dritten Fehlerprüfkodes (P, Q) wenigstens einmal ein Fehler außer für ein durch den Fehler-Zeiger (E) gekennzeichnetes Wort ermittelt wird, der Fehler-Zeiger (E) auf alle Wörter des das fehlerhafte Wort enthaltenden Datenblocks gesetzt wird, wenn der Neutralzeiger (N) auf ein Wort in dem Datenblock gesetzt ist.

12. Vorrichtung nach einem der Ansprüche 8 bis 10, bei dem der erste Fehlerprüfkode ein zyklischer Redundanzprüfkode (CRC) ist.

13. Vorrichtung nach einem der Ansprüche 8 bis 12, bei dem der zweite und der dritte Fehlerprüfkode (P, Q) Paritätskodes sind.

14. Vorrichtung nach einem der Ansprüche 8 bis 12, bei dem der zweite und der dritte Fehlerprüfkode Reed-Solomon-Kodes sind.

14

## Fig. 1

EP 0 194 888 B1

BLOCK NO.

## Fig. 2

| | Q | CRC | SYNC | ADRS | D1 | D2 | P | Q | CRC | SYNC | ADRS | D1 | |
|---|---|---|---|---|---|---|---|---|---|---|---|---|---|

— DATA BLOCK —

## Fig. 3

| PT1 | PT2 | F1 | F2 | F3 | F4 | MSB | 2SB | 3SB | | 14SB | 15SB | LSB |
|---|---|---|---|---|---|---|---|---|---|---|---|---|

POINTER — FLAG — DATA

EP 0 194 888 B1

## Fig. 4

|     |   | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 |
|-----|---|---|---|---|---|---|---|---|---|---|----|----|----|----|----|----|----|----|----|----|----|----|----|----|----|----|----|----|----|----|----|----|----|----|----|
| D1  | P |   | U | E | U |   |   | U | E | U |    |    | U  | E  | U  |    |    | C  | E  | C  |    |    |    |    |    |    |    |    |    |    |    |    |    |    |    |
|     | Q |   |   |   |   | U | E | U |   |   | U  | E  | U  |    |    | U  | E  | U  | C  | E  | C  |    |    |    |    |    |    |    |    |    |    |    |    |    |    |
| D2  | P |   |   |   |   |   | U | E | U |   |    | U  | E  | U  |    |    |    | C  | E  | C  |    |    |    | U  | E  | U  |    |    |    |    |    |    |    |    |    |
|     | Q |   |   |   |   |   |   |   |   | U | E  | U  |    |    | U  | E  | U  |    | C  | E  | C  | U  | E  | U  |    |    |    |    |    |    |    |    |    |    |    |
| P   | P |   |   |   |   |   |   |   |   |   |    |    | U  | E  | U  |    |    | C  | E  | C  |    |    |    | U  | E  | U  |    |    | U  | E  | U  |    |    |    |    |
|     | Q |   |   |   |   |   |   |   |   |   |    |    |    |    | U  | E  | U  |    | C  | E  | C  | U  | E  | U  |    | U  | E  | U  |    |    |    |    |    |    |    |
| Q   | P |   |   |   |   |   |   |   |   |   |    |    |    |    |    |    |    | C  | E  | C  |    |    |    | U  | E  | U  |    |    | U  | E  | U  |    |    | U  | E  | U |
|     | Q |   |   |   |   |   |   |   |   |   |    |    |    |    |    |    |    | C  | E  | C  |    | U  | E  | U  |    |    | U  | E  | U  |    | U  | E  | U |

CRC ERROR

PARITY ERROR

PER FLAG

# Fig. 5A

# Fig. 5B

EP 0 194 888 B1

Fig. 5C

Fig. 5D

EP 0 194 888 B1

## Fig. 6A

| | 1 | 2 | | | 5 | | | | | 10 | | | 13 | 14 | 15 | | 17 | 18 | 19 | 20 | | 22 | 23 | | 25 | | | | | 30 | | | | 34 |
|---|---|---|---|---|---|---|---|---|---|---|---|---|---|---|---|---|---|---|---|---|---|---|---|---|---|---|---|---|---|---|---|---|---|---|
| D1 | | | | | | | | | | | | | E | E | | | E | E | E | | | E | E | | | | | | | | | | | |
| D2 | | | | | | | | | | | | | E | E | | | E | E | E | | | E | E | | | | | | | | | | | |
| P | | | | | | | | | | | | | E | E | | | E | E | E | | | E | E | | | | | | | | | | | |
| Q | | | | | | | | | | | | | E | E | | | E | E | E | | | E | E | | | | | | | | | | | |

PER FLAG

## Fig. 6B

| | 1 | 2 | | | 5 | | | | | 10 | | | 13 | 14 | 15 | | 17 | 18 | 19 | 20 | | 22 | 23 | | 25 | | | | | 30 | | | | 34 |
|---|---|---|---|---|---|---|---|---|---|---|---|---|---|---|---|---|---|---|---|---|---|---|---|---|---|---|---|---|---|---|---|---|---|---|
| D1 | | | | | | | | | | | | | E | E | | | E | E | Ⓢ | | | Ⓢ | Ⓢ | | | | | | | | | | | |
| D2 | | | | | | | | | | | | | E | E | | | E | E | E | | | E | E | | | | | | | | | | | |
| P | | | | | | | | | | | | | E | E | | | E | E | E | | | E | E | | | | | | | | | | | |
| Q | | | | | | | | | | | | | Ⓢ | Ⓢ | | | Ⓢ | E | E | | | E | E | | | | | | | | | | | |

PER FLAG

Fig. 6C

Fig. 6D

EP 0 194 888 B1

# Fig. 7

|       |   | 1 | 2 | 3 |   | 5 | 6 | 7 |   | 9 | 10 | 11 |   | 12 | 13 | 14 | 15 |   | 17 | 18 |   | 20 |   | 22 | 23 |   | 25 | 26 | 27 |   |   | 30 | 31 | 32 | 33 | 34 |
|-------|---|---|---|---|---|---|---|---|---|---|----|----|---|----|----|----|----|---|----|----|---|----|---|----|----|---|----|----|----|---|---|----|----|----|----|----|
| **D1** | P |   | U | U |   |   | U | U |   |   |    |    |   | U  | C  | C  |    |   | C  | E  |   |    |   |    |    |   |    |    |    |   |   |    |    |    | U  |    |
|       | Q | U |   |   |   | U | E |   |   | U | E  |    |   |    | C  | C  | E  |   | C  | E  |   |    |   |    |    |   |    |    |    |   |   |    |    |    |    |    |
| **D2** | P |   |   | U |   |   | U | U |   |   |    |    |   | U  | C  | C  |    |   | C  | U  |   |    |   | U  | E  |   |    |    |    |   |   |    |    |    |    |    |
|       | Q |   |   |   |   |   | U |   |   |   | U  | E  |   |    | C  | C  | E  |   | C  | E  |   |    |   | U  | E  |   |    |    |    |   |   |    |    |    |    |    |
| **P** | P |   |   |   |   |   |   | U |   |   |    |    |   | U  | C  |    |    |   | C  | U  |   |    |   | U  | U  |   |    | U  | E  |   |   |    |    |    |    |    |
|       | Q |   |   |   |   |   |   |   |   | U |    |    |   |    | C  | C  | E  |   | C  | E  |   |    |   | U  | E  |   |    | U  | E  |   |   |    |    |    |    |    |
| **Q** | P |   |   |   |   |   |   |   |   |   |    |    |   |    | C  | C  |    |   | C  | U  |   |    |   | U  | U  |   |    |    | U  | U |   |    |    | U  | E  |    |
|       | Q |   |   |   |   |   |   |   |   |   |    |    |   |    | C  |    |    |   | C  | E  |   |    |   | U  | E  |   |    | U  | E  |   |   | U  | E  |    |    |    |

CRC ERROR   PARITY ERROR

PER FLAG

Fig. 8A

Fig. 8B

22

EP 0 194 888 B1

# Fig. 8C

# Fig. 9A

Fig. 9B

Fig. 9C

EP 0 194 888 B1